# EUROPÄISCHE PATENTSCHRIFT

(11) **EP 3 224 686 B1**
(45) Veröffentlichungstag und Bekanntmachung des Hinweises auf die Patenterteilung: **26.04.2023**
(21) Anmeldenummer: 15812948.6
(22) Anmeldetag: 16.11.2015
(51) Int. Cl.: G05D 1/02

(54) **FÖRDEREINHEIT UND FÖRDERSYSTEM ZUM FÖRDERN VON LADUNGSTRÄGERN**
CONVEYOR UNIT AND CONVEYOR SYSTEM FOR CONVEYING LOAD CARRIERS
UNITÉ DE TRANSPORT ET SYSTÈME DE TRANSPORT DE PORTEURS DE CHARGE

(30) Priorität: 24.11.2014 DE 102014017254
(43) Veröffentlichungstag der Anmeldung: 04.10.2017
(73) Patentinhaber: pentanova cs GmbH, 71032 Böblingen (DE); Melkus Mechatronic GmbH, 5112 Lamprechtshausen (AT)
(72) Erfinder: MELKUS, Andreas, 5112 Lamprechtshausen (AT)
(74) Vertreter: Ostertag & Partner Patentanwälte mbB
(86) Internationale Anmeldenummer: PCT/EP2015/002281
(87) Internationale Veröffentlichungsnummer: WO 2016/082918

(56) Entgegenhaltungen:
- EP-A1- 3 020 614
- EP-A2- 0 361 188
- EP-A2- 2 755 101
- EP-A2- 2 772 407
- WO-A1-2014/033055
- DE-U1-202013 007 279
- US-A- 5 023 790
- US-A- 5 040 116

## Beschreibung

Die vorliegende Beschreibung betrifft eine Fördereinheit zum Fördern von beladenen oder unbeladenen Ladungsträgern mit
a) einem Fahrwerk, welches auf Bodenrollen verfahrbar ist;
b) einem von dem Fahrwerk mitgeführten Tragelement, welches bezogen auf das Fahrwerk anhebbar oder absenkbar ist, derart, dass die Fördereinheit in einer Leerkonfiguration einen Ladungsträger unterfahren und in einer Förderkonfiguration einen Ladungsträger mit dem Tragelement aufnehmen und fördern kann;
c) einem Antriebssystem, mittels welchem wenigstens eine der Bodenrollen und das Tragelement antreibbar sind,
sowie
ein Fördersystem zum Fördern von beladenen oder unbeladenen Ladungsträgern mit mehreren Fördereinrichtungen.

Aus der DE 10 2008 014 877 A1 ist ein Fördersystem bekannt, bei dem jeweils zwei Fördereinheiten nach Art eines Transportwagens eine Fördereinrichtung bilden, wobei zwei Transportwagen für das Fördern von Ladungsträgern in Form von Paletten konzipiert sind. Hierzu können die beiden Transportwagen als Transportwagenpaar eine Palette unterfahren, diese dann anheben und an einen anderen Ort fördern. Insbesondere wird mit dem Fördersystem das automatische Verladen von Paletten in Lastkraftwagen ermöglicht. Hierzu ist jeder Transportwagen mit einem an ihm befestigten elektrischen Zuleitungskabel versehen, das die Antriebe des Transportwagens versorgt und ansteuert, Sensorsignale überträgt und ferner als Zugseil verwendet werden kann, um die Transportwagen in ihrer Bewegungsrichtung zu korrigieren. Zudem werden die Zuleitungskabel als Zugseile verwendet, um Fahrwegkorrekturen vorzunehmen. Ein derartiges Fördersystem ist jedoch stark in seiner Flexibilität eingeschränkt.

Aus der EP 2 772 407 A2 ist ebenso ein Fördersystem bestehend aus zwei Transportwägen bekannt.

Aus der EP 0 361 188 A2 ist ein fahrerloses Transportfahrzeug bekannt, dass mit Hilfe eines Lasers und einer Kamera Hindernisse erkennen kann.

Aus der US 5,023,790 ist ein fahrerloses Transportfahrzeug bekannt, das Hindernisse erkennen kann und mit einem Zentralrechner kommuniziert.

Aus der DE 20 2014 006 562 U1 ist ein Fördersystem bekannt, das Fördereinheiten umfasst, die voneinander getrennt sind und unabhängig voneinander verfahren werden können.

Besonders bei solchen freifahrenden Systemen ist es von immenser Bedeutung, dass der Fahrweg, auf dem sich eine solche Fördereinheit bewegt, frei von Hindernissen ist. Dabei besteht insbesondere die Gefahr, dass auch nach einer erfolgten Prüfung der Förderstrecken ein Hindernis in den Fahrweg gerät, seien es Gegenstände oder auch Personen, die versehentlich in den Förderweg hinein laufen. Unter Umständen können auch Baumaßnahmen dazu geführt haben, dass ein Fahrweg nicht mehr geeignet ist.

Es besteht die Aufgabe, für ein flexibles Fördersystem, das freifahrende Fördereinheiten umfasst, die Möglichkeit einer einfachen und effektiven Überwachung des Fahrweges anzubieten.

Diese Aufgabe wird bei einer Fördereinheit der eingangs genannten Art dadurch gelöst, dass
d) ein Sicherheitssystem mitgeführt wird, mittels welchem Hindernisse, die sich in dem Fahrweg der Fördereinheit befinden und eine Weiterfahrt der Fördereinheit einschränken, erfassbar sind.

Es wurde erkannt, dass bei freifahrenden Fördereinheiten die Möglichkeit besteht, eine Überwachung des Fahrweges zu integrieren, ohne dass dies auf Kosten der Flexibilität des Systems geht.

Vorzugsweise umfasst das Sicherheitssystem eine optische Detektionseinrichtung.

Dabei ist es günstig, wenn die optische Detektionseinrichtung eine Bilderzeugungseinrichtung, mittels welcher ein Detektionsbild im Fahrweg der Fördereinheit erzeugbar ist, und eine Kamera umfasst, mittels welcher das Detektionsbild im Fahrweg aufnehmbar ist und als Analysebild anzeigbar ist.

Ein vorteilhaftes Detektionsbild liegt in Form einer Detektionslinie vor.

Es ist von Vorteil, wenn durch die Bilderzeugungseinrichtung ein Strahlfächer erzeugbar ist, welcher aus einer horizontalen Ebene in einem Winkel α um eine Kippachse, die horizontal und senkrecht zur Längsachse einer Fördereinheit verläuft, verkippt ist und in den Fahrweg der Fördereinheit abgegeben wird. Je näher ein Objekt der Fördereinheit ist, auf welches die so erzeugte Detektionslinie trifft, desto größer ist der vertikale Abstand der Detektionslinie an dem Objekt vom Boden.

Dabei beträgt der Winkel α zwischen 2° und 10°, vorzugsweise etwa 5°.

Ein alternatives Detektionsbild kann genutzt werden, wenn durch die Bilderzeugungseinrichtung ein Strahlfächer erzeugbar ist, welcher außerdem in einem Winkel β um eine weitere Kippachse, die parallel zur Längsachse der Fördereinheit und in einer horizontalen Ebene verläuft, verkippt ist und in den Fahrweg der Fördereinheit abgegeben wird. Hierdurch können Überlappungseffekte genutzt werden. Hierauf wird weiter unten nochmals eingegangen.

Die oben genannte Aufgabe wird bei einem Fördersystem der eingangs genannten Art dadurch gelöst, dass die Fördereinrichtungen jeweils wenigstens zwei zusammenarbeitende Fördereinheiten mit einigen oder allen der oben erläuterten Merkmale haben.

In diesem Fall ist es vor allem günstig, wenn die Detektionsbilder der wenigstens zwei Fördereinheiten so abgestimmt sind, dass diese in einem Überlappungsbereich in Fahrtrichtung vor den Fördereinheiten überlappen.

Die Erfindung als solche wird in dem Anspruch 1 dargestellt.

Nachfolgend werden Ausführungsbeispiele der Erfindung anhand der Zeichnungen näher erläutert. In diesen zeigen:
- Figur 1: eine perspektivische Ansicht eines Fördersystems zum Fördern von Ladungsträgern, bei welchem zwei unabhängig voneinander verfahrbare, zinkenartige Fördereinheiten eine Fördereinrichtung bilden;
- Figur 2: eine der Figur 1 entsprechende perspektivische Ansicht des Fördersystems, wobei außerdem ein Ladungsträger in Form einer Palette gezeigt ist;
- Figur 3: eine Seitenansicht einer Fördereinheit in einer Leerkonfiguration in teilweiser Durchsicht, so dass ein Fahrwerk, ein Antriebssystem und eine Hub-/Senkeinrichtung für ein Tragelement zu erkennen sind;
- Figur 4: eine Ansicht von oben in teilweiser Durchsicht auf die Fördereinheit;
- Figur 5: ein Kopfmodul einer Fördereinheit in einer Ansicht von oben in teilweiser Durchsicht, in welchem Komponenten eines Sicherheitssystems, insbesondere ein Bilderzeugungseinrichtung und eine Kamera, untergebracht sind;
- Figur 6: das Kopfmodul von Figur 5 in einer perspektivischen Ansicht;
- Figur 7: eine Seitenansicht eines Stirnendes einer Fördereinheit, wobei ein Aufnahmefenster der Kamera und ein durch einen Laserstrahl erzeugtes Detektionsbild veranschaulicht sind;
- Figur 8: eine perspektivische Ansicht eines Stirnendes einer Fördereinheit, wobei ebenfalls das Aufnahmefenster der Kamera und außerdem ein Strahlfächer gezeigt ist, durch welchen das Detektionsbild erzeugt wird;
- Figur 9: eine Draufsicht auf eine Fördereinrichtung mit zwei Fördereinheiten, wobei ein das Kamerabild der jeweiligen Kamera einer Fördereinheit widerspiegelndes Analysebild veranschaulicht ist;
- Figur 10: nochmals eine Seitenansicht einer Fördereinheit und resultierende Analysebilder bei unterschiedlichen Gegenständen im Fahrweg;
- Figur 11: eine Seitenansicht der Fördereinheit und ein resultierendes Analysebild bei einer Stufe im Fahrweg;
- Figur 12: eine Draufsicht auf eine Fördereinrichtung, wobei das Analysebild für die jeweilige Kamera einer Fördereinheit veranschaulicht ist und die Strahlfächer der jeweils erzeugten Laserstrahlen modifiziert ist;
- Figur 13: eine Draufsicht auf eine Fördereinrichtung, wobei das Analysebild für die jeweilige Kamera einer Fördereinheit veranschaulicht ist und die Strahlgeometrie der jeweils erzeugten Laserstrahlen nochmals modifiziert ist;
- Figur 14: eine Seitenansicht einer abgewandelten Fördereinheit, bei welche der Laser beim Anheben oder Absenken des Tragelements mitgeführt wird, wobei die Fördereinheit sich in der Leerkonfiguration befindet;
- Figur 15: eine Seitenansicht der Fördereinheit von Figur 14, wobei sich die Fördereinheit in der Förderkonfiguration befindet;
- Figur 16: eine Frontansicht zweier Fördereinrichtungen nach den Figuren 14 und 15 in ihrer Leerkonfiguration;
- Figur 17: eine der Figur 16 entsprechende Frontansicht, wobei sich die Fördereinrichtungen in ihrer Förderkonfiguration befinden.

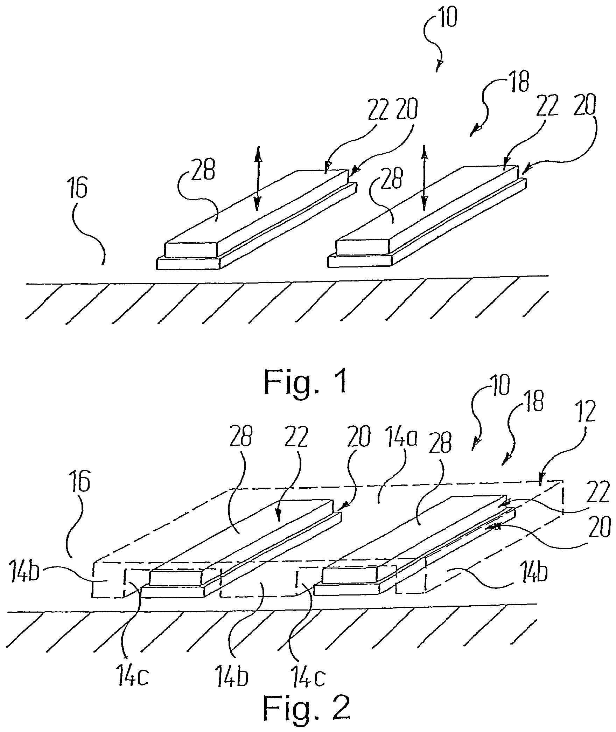

In den Figuren ist mit 10 insgesamt ein Fördersystem bezeichnet, mit dem Gegenstände, hier beladene oder unbeladene Ladungsträger 12, gefördert werden können. Als Beispiel für Ladungsträger 12 ist in der Figur 2 eine Palette gezeigt, wie sie an und für sich bekannt ist.

Ein Ladungsträger 12 hat eine Tragfläche 14a, auf welcher nicht eigens gezeigtes Fördergut abgestellt und befestigt werden kann. Die Tragfläche 14a ruht über Auflageelemente 14b auf einem Boden 16. Zwischen zwei benachbarten Auflageelementen 14b verbleibt jeweils ein lichter Durchgang 14c, der nach unten zum Boden 16 hin und an beiden Stirnenden offen ist. Insbesondere kann ein solcher Ladungsträger 12 als so genannte Euro-Palette ausgebildet sein.

Das Fördersystem 10 umfasst eine Vielzahl von Fördereinrichtungen 18, die auf dem Boden 16 verfahren werden können. Eine Fördereinrichtung 18 ist ihrerseits aus zwei Fördereinheiten 20 gebildet. Die Fördereinheiten 20 haben beim vorliegenden Ausführungsbeispiel eine Außenkontur, die etwa derjenigen einer Gabelzinke eines Gabelstaplers entspricht.

Diese Fördereinheiten 20 kommunizieren in an und für sich bekannter Weise miteinander oder mit einer nicht eigens gezeigten Zentralsteuerung, die den Förderprozess koordiniert.

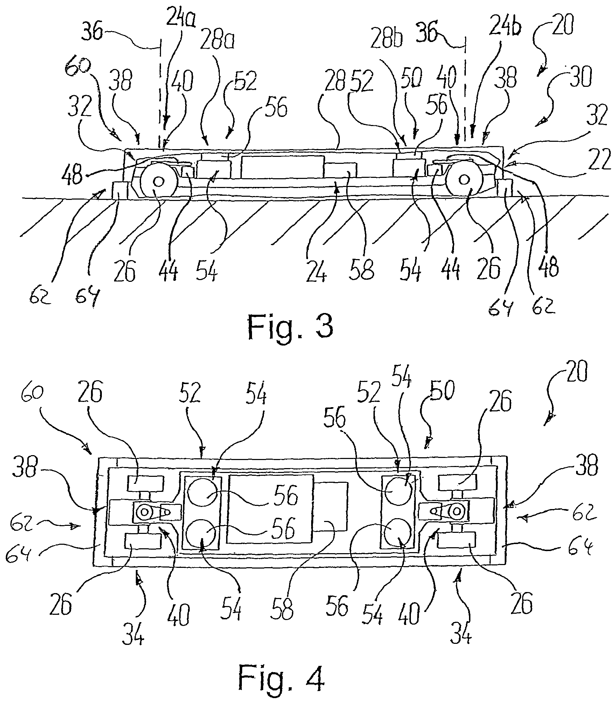

In den Figuren 3 und 4 ist eine der Fördereinheiten 20 der Fördereinrichtung 18 separat gezeigt. Die Fördereinheit 20 umfasst ein Fahrwerk 24, welches auf Bodenrollen 26 verfahren werden kann und zwei Endbereiche 24a, 24b definiert.

Das Fahrwerk 24 führt außerdem ein Tragelement 28 mit sich, welches bezogen auf das Fahrwerk 24 angehoben oder abgesenkt werden kann; dies ist lediglich in Figur 1 durch Doppelpfeile veranschaulicht. Wenn das Tragelement 28 eine abgesenkte Stellung einnimmt, befindet sich die Fördereinheit 20 in einer Leerkonfiguration, in welcher sie den Ladungsträger 12 unterfahren kann. In dieser Leerkonfiguration kann die Fördereinheit 20 auch durch den lichten Durchgang 14c des Ladungsträgers 12 hindurchfahren, d.h. dass die Fördereinheit 20 auf einer Seite unter den Ladungsträger 12 einfahren, unter diesem hindurch und auf der anderen Seite wieder aus dem Ladungsträger 12 herausfahren kann. Hierzu ist die Fördereinheit 20 in ihrer Außenkontur auf zu fördernde Ladungsträger 12 abgestimmt. Im Falle einer Palette bedeutet dies, dass die Fördereinheit 20 in ihrer Leerkonfiguration solche Abmessungen hat, dass sie in einen von deren lichten Durchgängen 14c einfahren kann, so dass sich die Fördereinheit 20 in diesem Durchgang 14c unter der Tragfläche 14a der Palette befindet.

Umgekehrt müssen auch die Ladungsträger 12 an die Fördereinheiten 20 angepasst sein und wenigstens Raum für zwei Fördereinheiten 20, beispielsweise in der Form von zwei solchen lichten Durchgänge 14c bereitstellen.

Dann wird das Tragelement 28 einer Fördereinheit 20 bezogen auf das Fahrwerk 24 angehoben. Wenn das Tragelement 28 eine angehobene Stellung einnimmt, befindet sich die Fördereinheit 20 in einer Förderkonfiguration, in der sie einen Ladungsträger 12 mit ihrem Tragelement 28 aufnehmen und zusammen mit einer weiteren Fördereinheit 20 fördern kann.

Wie in den Figuren 3 und 4 zu erkennen ist, umfasst jede Fördereinheit 20 ein Antriebssystem 30, mittels welchem die Bodenrollen 26 und das Tragelement 28 antreibbar sind.

Für das Fahrwerk 24 umfasst das Antriebssystem 30 einen Fahrantrieb 32, der die Bodenrollen 26 antreibt. Die Bodenrollen 26 sind jeweils als Rollenpaar 34 um eine Lenk-Drehachse 36 verdrehbar gelagert. Die Lenk-Drehachsen 36 sind nur in Figur 3 gezeigt und verlaufen vertikal, wenn die Fördereinheit 20 mit den Bodenrollen 26 auf einem horizontal ebenen Boden 16 aufliegt.

Der Fahrantrieb 32 umfasst Antriebseinheiten 38 und Lenkeinheiten 40 an den gegenüberliegenden Endbereichen 24a, 24b des Fahrwerks 24. Die Antriebseinheiten 38 umfassen Antriebs-Elektromotoren 42, welche die Bodenrollen 26 ohne zwischengeschaltete Getriebemittel antreiben.

Die Antriebseinheiten 38 und die Lenkeinheiten 40 können auch als Baugruppe zusammengefasst sein. So kann auch schlicht jede Bodenrolle 26 durch einen eigenen Antrieb angetrieben werden und eine Lenkung durch unterschiedliche Drehzahlen der beiden Bodenrollen 26 einer Baugruppe bewirkt werden.

Zwischen einer Bodenrolle 26 und dem zugehörigen Elektromotor kann zudem ein Getriebe, beispielsweise ein in die Bodenrolle 26 integriertes Planetengetriebe, geschaltet sein. Ob derartige Getriebemittel vorgesehen sind oder nicht, hängt von den speziellen Anforderungen an das Transportsystem vor Ort ab.

Die Lenkeinheiten 40 umfassen jeweils einen Lenk-Elektromotor 44, der über Getriebemittel 46, beispielhaft ist in den Figuren 3 und 4 ein Riemenzug 48 veranschaulicht, die Lage der Bodenrollen 26 bezogen auf ihre Lenk-Drehachse 36 einstellen kann.

Die Fördereinheiten 20 werden nun verfahren, indem die Antriebs-Elektromotoren 42 und die Lenk-Elektromotoren 44 aufeinander abgestimmt bestromt werden.

Wenn alle vier Bodenrollen 26 einer Fördereinheit 20 senkrecht zur Längsrichtung der Fördereinheit 20 ausgerichtet sind und alle Antriebs-Elektromotoren 42 gleich angesteuert werden, nimmt die Fördereinheit 20 eine Linearfahrt-Konfiguration für eine Geradeaus-Fahrt ein; dies veranschaulicht exemplarisch die in der Figur 4 gezeigte Fördereinheit 20.

Für Kurvenfahrten muss die Ausrichtung der Achsen der Bodenrollen 26 bezogen auf die Längsrichtung der Fördereinheiten 20 geändert werden. Dazu können die Bodenrollen 26 jeweils als Rollenpaar durch die Lenk-Elektromotoren 44 um die Drehachse 36 verdreht werden.

So kann die Fördereinheit 20 eine Kurvenfahrt-Konfiguration einnehmen und eine Kreiskurve fahren, wenn die Rollenpaare 34 so ausgerichtet sind, dass die Achsen der Bodenrollen 26 senkrecht auf der zu fahrenden Kreiskurve stehen. Bei einer Fördereinrichtung 18 mit zwei Fördereinheiten 20 kann eine Palette 14 dann beispielsweise auch auf der Stelle verdreht werden, wenn alle vier Rollenpaare 34 der beiden Fördereinheiten 20 in dieser Weise auf einen und denselben Kreis ausgerichtet sind.

Während Kurvenfahrten kann die Steuerung auch die unterschiedlichen Laufwege der bezogen auf die Kurve radial außen liegenden Bodenrollen 26 gegenüber den radial innen liegenden Bodenrollen 26 berücksichtigen. Die unterschiedlichen Laufwege können auch durch Getriebemittel der Antriebseinheiten 38 ausgeglichen werden.

Für das Anheben und Absenken des Tragelements 28 umfasst das Antriebssystem 20 eine Hub-/Senkeinrichtung 50. Diese Hub-/ Senkeinrichtung 50 arbeitet unabhängig von dem Fahrantrieb 32.

Dadurch ist das Antriebssystem 20 derart eingerichtet, dass das Tragelement eine Bewegung durchführen kann, die sich als eine Überlagerung einer horizontalen Bewegungskomponente des Fahrwerks 24 und einer vertikalen Bewegungskomponente des Tragelements 28 beschreiben lässt. Dies bedeutet, dass die Fördereinrichtung 18 den Ladungsträger 12 mit oder ohne Ladung während der Fahrt anheben oder absenken kann. Die Fördereinheiten 20 der Fördereinrichtung 18 müssen hierfür nicht stillstehen, können dies jedoch bei Bedarf.

Die Hub-/Senkeinrichtung 50 umfasst zwei Hub-/Senkeinheiten 52, von denen beim vorliegenden Ausführungsbeispiel an den beiden Endbereichen 24a, 24b des Fahrwerks 24 jeweils eine angeordnet ist. Die beiden Hub-/Senkeinheiten 52 sind jeweils mit unterschiedlichen Bereichen 28a, 28b des Tragelements 28 gekoppelt. An den Koppelstellen können die Hub-/Senkeinheiten 52 jeweils ein Anheben oder Absenken des Tragelements 28 bewirken.

Die Figuren 3 und 4 veranschaulichen ein Ausführungsbeispiel, bei welchem jede Hub-/Senkeinheit 52 jeweils zumindest einen Arbeitszylinder 54 umfasst, der mit einem beweglichen Zylinderelement 56 an der dem Fahrwerk 24 zugewandten Seiten des Tragelements 28 angreift.

Wie in Figur 4 zu erkennen ist, kann eine Hub-/Senkeinheit 52 auch jeweils zwei Arbeitszylinder 54 umfassen, die quer zur Längsrichtung der Fördereinheit 20 nebeneinander am Fahrwerk 24 angebracht sind.

Dabei können die beiden Hub-/Senkeinheiten 52 einer Fahreinheit 20 unabhängig voneinander betrieben werden. In Figur 3 ist die Fördereinheit 20 in ihrer Leerkonfiguration gezeigt. Zum einen können die Tragelemente 28 im Vergleich zu der Leerkonfiguration gleichmäßig gegenüber dem Fahrwerk 24 angehoben werden und eine entsprechende Förderkonfiguration einnehmen.

Zum anderen kann das Tragelement 28 in Längsrichtung der Fördereinheit 20 jedoch auch in eine geneigte Längsneigungs-Förderkonfiguration gebracht werden, wobei das Tragelement 28 am einen Endbereich 24a des Fahrwerks 24 diesem gegenüber weiter angehoben ist als am gegenüberliegenden Endbereich 24b.

Auf diese Weise können also nicht nur Neigungen des Bodens 16 quer zur Fahrtrichtung durch zwei zusammenarbeitende Fördereinheiten 20 einer Fördereinrichtung 18, sondern auch längs zur Fahrtrichtung der Fördereinrichtung 18 durch jeweils eine der Fördereinheiten 20 ausgeglichen werden.

Jede Fördereinheit 20 führt als On-Board-Steuereinrichtung eine Steuereinheit 58 mit sich, über welche die Fördereinheit 20 mit der Zentralsteuerung kommuniziert.

Weitere Möglichkeiten zur Ausgestaltung der Fördereinheiten sind der DE 20 2014 006 562 U1 zu entnehmen.

Bei einer konkreten Ausbildung sind das Fahrwerk 24 und das Tragelement 28 als eine Art Halbschalen ausgebildet, deren offene Seiten aufeinander zuweisen und welche ineinander einfahren können. In der Praxis wird dabei das Tragelement 28 über das Fahrwerk 24 geschoben.

Um Sach- und Personenschäden zu vermeiden, umfasst jede Fördereinheit 20 ein Sicherheitssystem 60, mittels welchem Hindernisse, die sich in dem Fahrweg der Fördereinheit 20 befinden und eine Weiterfahrt der Fördereinheit 20 einschränken, erfasst werden können. Solche Hindernisse können insbesondere Gegenstände oder Personen, die sich in dem Fahrweg einer Fördereinheit 20 befinden oder in diesen gelangt sind, aber auch Unregelmäßigkeiten im Fahrweg sein. Beim Erkennen von Hindernissen kann dies dann über die On-Board-Steuerung 58 der Zentralsteuerung mitgeteilt werden.

Komponenten des Sicherheitssystems 60 sind weitgehend in den gegenüberliegenden Stirnbereichen 62 einer Fördereinheit 20 untergebracht. Beim vorliegenden Ausführungsbeispiel führt eine Fördereinheit an beiden Stirnbereichen 62 jeweils ein Kopfmodul 64 mit sich, welches die Komponenten des Sicherheitssystems 60 aufnimmt und welche nur bei den Fördereinheiten 20 in den Figuren 3 und 4 gezeigt sind.

Das Sicherheitssystem 60 kann somit in beide Fahrtrichtungen der Fördereinheit 20 arbeiten und ist nicht auf eine Fahrtrichtung beschränkt.

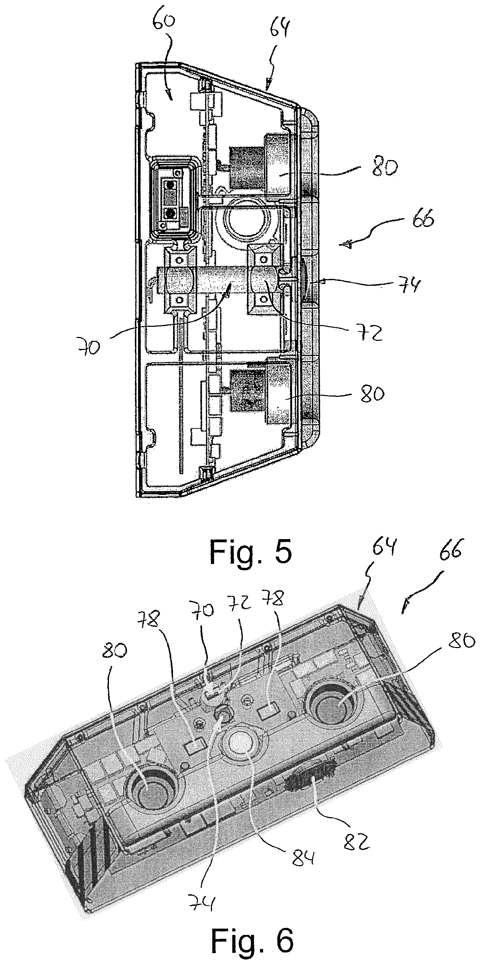

Wie die Figuren 5 und 6 zeigen, umfasst das Sicherheitssystem 60 eine optische Detektionseinrichtung 66, mit deren Hilfe die Umgebung einer Fördereinheit 20 in einem Detektionsbereich 68 auf Hindernisse überwacht werden kann.

Hierzu umfasst die Detektionseinrichtung 66 beim vorliegenden Ausführungsbeispiel eine Bilderzeugungseinrichtung 70, bei der es sich in der Praxis um einen Laser 72 handelt, welcher nachfolgend stellvertretend für eine Bilderzeugungseinrichtung 70 steht. Anstelle eines Lasers 72 können auch andere, in geeigneter Weise leuchtstarke Lichtquellen verwendet werden, beispielsweise LEDs oder auch ein LED-Array, die gegebenenfalls mit einer Linsenanordnung zusammenarbeiten. Der Laser 72 erzeugt in der Praxis grünes Licht mit einer Wellenlänge von 625 nm. Der Laser kann auch Licht in einem für den Menschen nicht sichtbaren Wellenlängenbereich abgeben. Grundsätzlich ist die Wellenlänge des Lasers für die eigentliche Funktion nicht relevant, solange das erzeugte Bild erfasst werden kann.

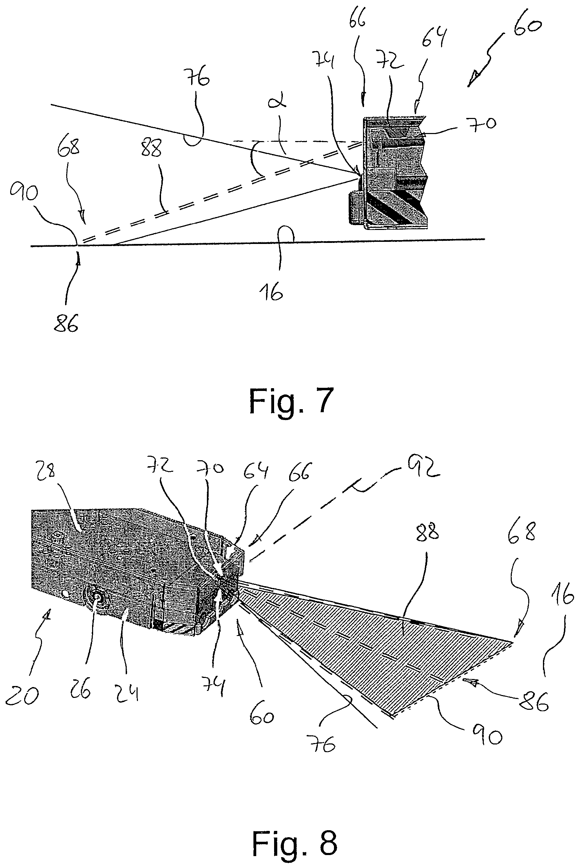

Der Laser 72 arbeitet mit einer Kamera 74 zusammen, mit welcher ein Kamerabild in einem Aufnahmefenster 76 erstellt werden kann, das in den Figuren 7 und 8 angedeutet ist.

Zum Ausleuchten des Fahrweges einer Fördereinheit 20 und damit des Aufnahmefensters 76 sind LEDs 78 vorhanden, welche Licht auf den Fahrweg der Fördereinheit 20 abgeben. Es kann auch Licht in einem für den Menschen nicht sichtbaren Wellenlängenbereich genutzt werden.

Außerdem sind in einem Kopfmodul 64 noch ergänzend zwei Ultraschalltransceiver 80 vorhanden, welche die optische Detektionseinrichtung 66 gegebenenfalls unterstützen kann. An dem Kopfmodul 64 ist ein Lautsprecher 82 vorhanden, mittels welchem im Gefahrenfall ein akustisches Warnsignal abgegeben werden kann. Für einen Notstopp ist außerdem ein Taster 84 vorgesehen, dessen Betätigung zu einer sofortigen Betriebsunterbrechung einer Fördereinheit 20 führt. Auf diese Weise ist eine Redundanz durch zwei unabhängig arbeitende Detektionseinrichtungen gegeben.

Die Bilderzeugungseinrichtung 70 und damit vorliegend der Laser 72 erzeugt ein Detektionsbild 86 im Fahrweg der Fördereinheit 20. Beim vorliegenden Ausführungsbeispiel erzeugt der Laser 72 einen ebenen Strahlfächer 88, welcher in den Fahrweg der Fördereinheit 20 und somit auf den Boden 16 abgegeben wird, so dass dort als Detektionsbild 86 eine Detektionslinie 90 abgebildet wird. Hierzu ist der Strahlfächer 88 aus einer horizontalen Ebene in einem Winkel α um eine Kippachse 92 verkippt, die horizontal und senkrecht zur Längsachse einer Fördereinheit 20 verläuft und welche nur in Figur 8 gezeigt ist. Der Winkel α beträgt zwischen 2° und 10° und liegt vorzugsweise bei etwa 5°.

Allgemein ausgedrückt ist der Strahlfächer 88 von der Bilderzeugungseinrichtung 70 aus einer horizontalen Ebene in Richtung auf den Fahrweg nach unten geneigt.

Das Detektionsbild 86 und die Kamera 74 sind so aufeinander abgestimmt, dass das Detektionsbild 86 zumindest bereichsweise im Aufnahmefenster 76 der Kamera 74 liegt und von dieser aufgenommen werden kann. Der Laser 72 arbeitet in der Praxis gepulst, wozu er gechoppt oder getaktet werden kann. In diesem Fall ist es möglich, anhand der genutzten Chopp- oder Taktfrequenz ein erzeugtes Detektionsbild 86 einer bestimmten Fördereinheit 20 zuzuordnen. Auf diese Weise kann auch ausgeschlossen werden, dass Laserlicht aus anderen Quellen als Lasersignal der Fördereinheit 20 erfasst wird.

Die Verkippung und Ausrichtung des Strahlfächers 88 nach Figur 8 spiegelt eine erste Detektionskonfiguration der Fördereinrichtung 18 wider. Die Detektionslinie 90 verläuft bei einem horizontalen, ebenen Boden 16 dann ebenfalls senkrecht zur Längsachse der Fördereinheit 20.

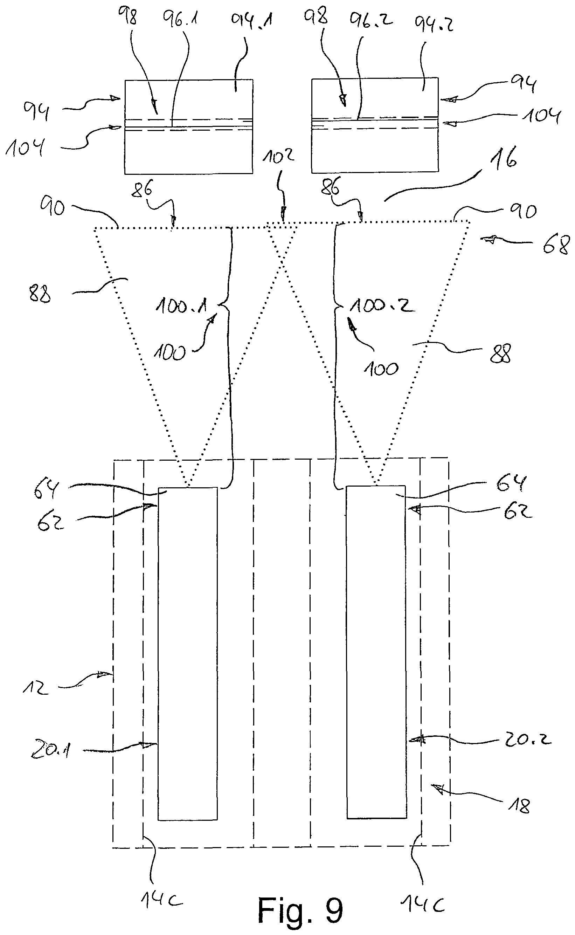

Figur 9 zeigt eine Fördereinrichtung 18, deren zwei Fördereinheiten 20 in die lichten Durchgänge 14c eines gestrichelt gezeigten Ladungsträgers 12 eingefahren sind. Die beiden Fördereinheiten sind dort mit 20.1 und 20.2 bezeichnet.

Jede Kamera 74 erfasst ein Kamerabild 94, wobei in Figur 9 die von der jeweils zugehörigen Kamera 74 der Fördereinheiten 20.1, 20.2 erfassten Kamerabilder 94 mit 94.1 und 94.2 bezeichnet sind. Dort ist jeweils eine durchgezogene Analyselinie 96 als Analysebild 98 der Detektionslinie 90 zu erkennen, die für jede Fördereinheit 20.1, 20.2 mit 96.1 bzw. 96.2 bezeichnet sind. Die Analyselinien 96 stehen gleichsam für den Horizont der Detektionslinie 90.

Die Lage der Analyselinie 96 im Bild 94 hängt von dem Abstand 100 der Fördereinheit 20 zur Detektionslinie 90 ab. In Figur 9 sind die Abstände zwischen den beiden Fördereinheiten 20.1 und 20.2 zur zugehörigen Detektionslinie 90 mit 100.1 und 100.2 bezeichnet. Dort ist der Abstand 100.1 etwas kürzer als der Abstand 100.2, was sich in den Bildern 94.1 und 94.2 darin äußert, dass die Analyselinie 96.1 bei einer Projektion der Bilder 94.1 und 94.2 gegenüber der Analyselinie 96.2 in vertikaler Richtung nach unten versetzt erscheint.

Bei gleichmäßigen Bodenverhältnissen und einem ebenen sowie horizontalen Boden 16 beträgt der Abstand 100 in der Praxis zwischen 20 cm und 200 cm, wobei 40 cm bis 100 cm bevorzugt sind. Aber auch andere Abstände 100 sind möglich.

Die von jeder Bildererzeugungseinrichtung 70 erzeugten Strahlbilder 86 sind so ausgebildet, dass sie am Boden 16 in einem Überlappungsbereich 102 überlappen, wenn sich zwei Fördereinheiten 20 im Verband als Fördereinrichtung 18 bewegen und dabei ihre Förderkonfiguration einnehmen, wobei sich der Überlappungsbereich 102 dann in Fahrtrichtung vor den Fördereinheiten 20 befindet. Auf diese Weise ist sichergestellt, dass der Fahrweg der Fördereinrichtung 18 mit beiden Fördereinheiten 20 über die gesamte Breite abgedeckt ist. Außerdem sind die von jeder Bildererzeugungseinrichtung 70 erzeugten Strahlbilder 86 so ausgebildet, dass sie seitlich über die lichte Breite des Ladungsträgers 12 hinausragen, so dass auch der Bereich entlang des Fahrwegs seitlich neben dem Ladungsträger 12 abgedeckt ist. Dabei wird ein Sicherheitsbereich eingehalten, so dass gewährleistet ist, dass auch Hindernisse erkannt werden, die mit gegebenenfalls seitlich über den Ladungsträger 12 hinausragendem Transportgut kollidieren könnten.

Wie Figur 9 veranschaulicht, befindet sich eine Analyselinie 96 im Analysebild 98 in einem durch gestrichelte Linien begrenzten Soll-Bereich 104, welcher Lageveränderungen der Analyselinie 96 auf Grund von tolerierbaren Änderungen der Bodenverhältnisse, wie beispielsweise leichte Bodenwellen, abdeckt. Solange sich die Analyselinie 96 in diesem Soll-Bereich 104 befindet, sind die Boden- und Wegverhältnisse im Fahrweg vor der Fördereinheit 20 in Ordnung. Der Verlauf der Analyselinie 96 im Analysebild 98 wird durch einen Bildauswertealgorithmus ermittelt, wie er an für sich bekannt. Hierzu umfasst das Sicherheitssystem 60 entsprechende Bildauswertemittel, die beispielsweise von der On-Board-Steuerung 58 umfasst sein können.

Eine Gefahrensituation durch ein Hindernis, sei es ein Gegenstand, eine Person oder eine Unregelmäßigkeit im Fahrweg der Fördereinheit 20 spiegelt sich nun darin wieder, dass die Analyselinie 90 ganz oder Teilweise aus dem Soll-Bereich 104 herausfällt. Dies wird nun nachfolgen anhand einiger Beispiele erläutert:

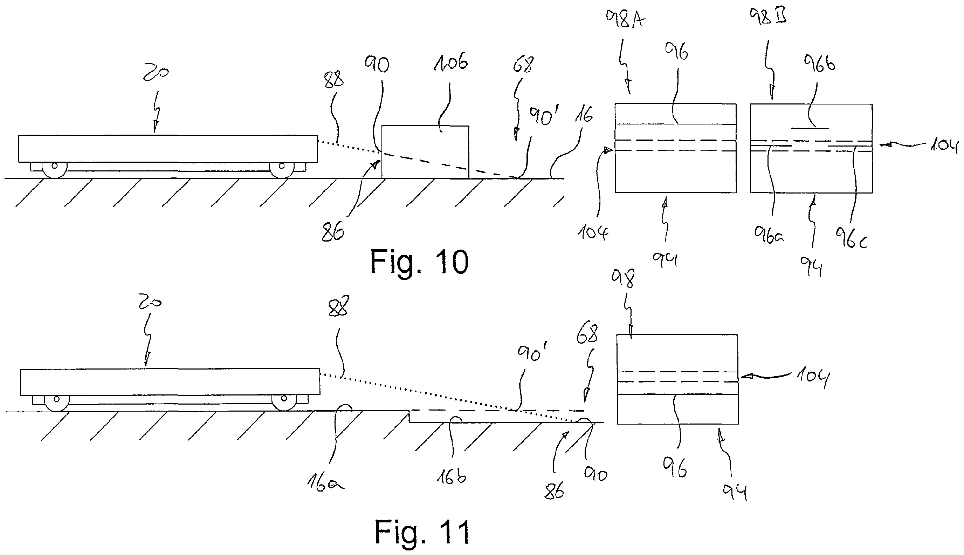

Figur 10 illustriert zwei Fallbeispiele, in denen sich ein Gegenstand 106 als Hindernis im Fahrweg einer Fördereinheit 20 befindet, anhand zweier Analysebilder 98A und 98B.

Das Analysebild 98A ergibt sich bei einem Gegenstand 106, der so breit ist, dass er das Aufnahmefenster 76 der Kamera 74 in der Breite voll abdeckt.

Ohne Gegenstand 106 im Fahrweg würde die Detektionslinie 90 am Boden 16 abgebildet, der zugehörige Strahlfächer 88 ist in Figur 10 durch gestrichelte Linien angedeutet. Da der Strahlfächer 88 geneigt ist, erscheint die Detektionslinie 90 an dem Gegenstand bezogen auf den Boden 16 höher, als die Detektionslinie 90 am Boden 16 abgebildet würde. Der Verlauf des Strahlfächers 88 ohne vorhandenen Gegenstand 106 ist in Figur 10 mit einer gestrichelten Linie gezeigt; dieser Strahlfächer 88 würde eine Detektionslinie am Boden 16 erzeugen, die hier mit 90' bezeichnet ist.

Diese Soll-Detektionslinie 90' läge im Analysebild 98 im Soll-Bereich 104. Demgegenüber erscheint die Analyselinie 96, welche die tatsächlich von der Kamera 74 erfasste Detektionslinie 90 am Gegenstand 106 widerspiegelt, nach oben aus dem Soll-Bereich 104 heraus versetzt im Analysebild 98A.

Das Analysebild 98B ergibt sich dagegen bei einem Gegenstand 106, der das Aufnahmefenster 76 der Kamera 74 in der Breite nicht voll abdeckt. Dann erstreckt sich der Strahlfächer 88 zu beiden Seiten neben dem Gegenstand 106 weiter zum Boden, wie es dem in Figur 10 gestrichelt gezeigten Verlauf entspricht. Die Detektionslinie 90 setzt sich dann zu beiden Seiten des Gegenstandes 106 am Boden 16 fort und folgt dort der mit 90' bezeichneten Linie, die nun tatsächlich in Fahrtrichtung vor dem Gegenstand 106 am Boden abgebildet wird. Der Gegenstand 106 bildet in einem solchen Fall also gleichsam eine Abschattung.

In diesem Fall umfasst die Analyselinie 96 drei Abschnitte 96a, 96b und 96c. Die Abschnitte 96a und 96c spiegeln die Detektionslinie 90' zu beiden Seiten des Gegenstandes 106 wider, wogegen der Abschnitt 96b die Detektionslinie 90 am Gegenstand 106 repräsentiert.

Auf Grund der Neigung des Strahlfächers 88 ist die Detektionslinie 90 am Gegenstand 106 bezogen auf den Boden 16 höher angesiedelt als deren Verlauf in Form der Detektionslinie 90' am Boden 16. Aus diesem Grund erscheint der Abschnitt 96b der Analyselinie 96 oberhalb des Soll-Bereichs 104.

Ein entsprechendes Analysebild ergibt sich beispielsweise auch, wenn eine Person in den Fahrweg der Fördereinheit 20 tritt.

Figur 11 veranschaulicht eine unvorhergesehene Unregelmäßigkeit im Fahrweg der Fördereinheit 20 am Beispiel einer Abwärtsstufe 108 im Boden 16. Dieser ist durch die Stufe 108 in zwei Bodenabschnitte 16a, 16b geteilt, wobei der Bodenabschnitt 16b tiefer liegt als der Bodenabschnitt 16a.

In Figur 11 ist ein gestrichelter Verlauf des Bodens 16 als Fortführung des Bodenabschnitt 16a gezeigt, wie es ohne die Stufe 108 der Fall wäre. Dann würde eine Detektionslinie 90' erzeugt, die im Analysebild 98 im Soll-Bereich 104 erscheinen würde. Am tatsächlich vorliegenden Bodenabschnitt 16b wird die Detektionslinie 90 erzeugt, die demgegenüber tiefer liegt. Daher erscheint die Analyselinie 96, welche die tatsächlichen Gegebenheiten widerspiegelt, im Analysebild 98 nach unten aus dem Soll-Bereich 104 heraus versetzt.

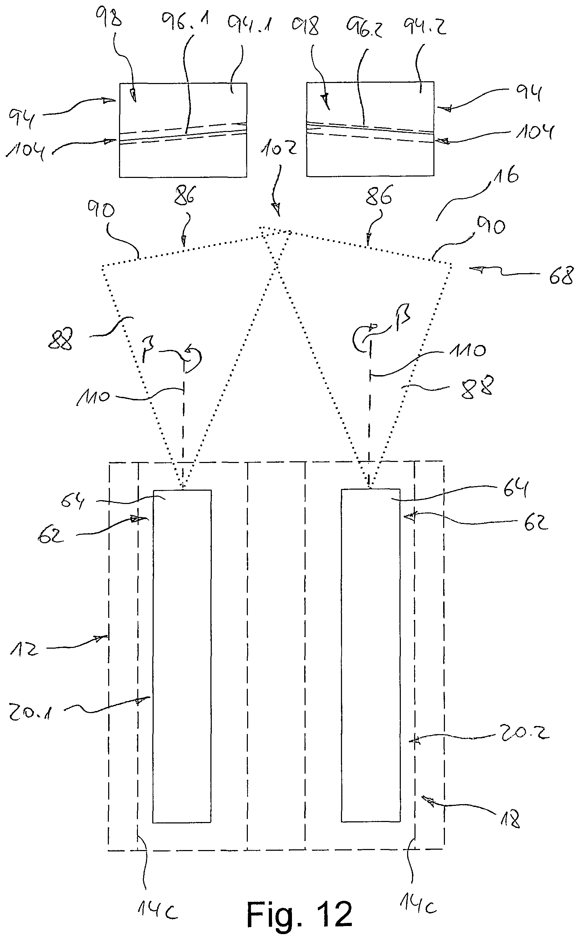

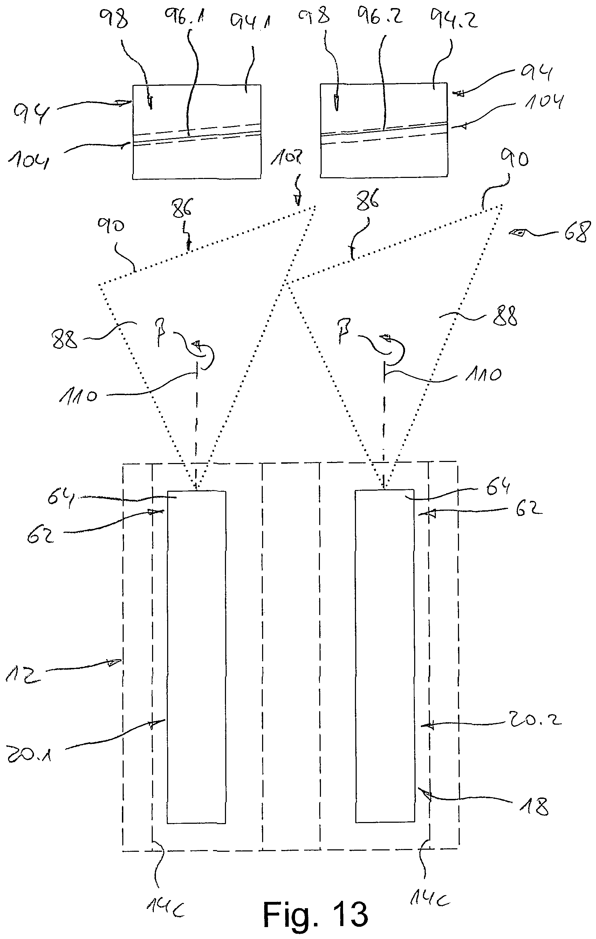

Die Figuren 12 und 13 zeigen als Beispiele für eine zweite und eine dritte Detektionskonfiguration der Fördereinrichtung 18 zwei Ausführungsbeispiele, bei denen die Ausbildung des Detektionsbildes 86 modifiziert ist, indem der Strahlfächer 88 nicht nur in vertikaler Richtung um die Kippachse 92, sondern noch um eine weitere Kippachse 110 um einen weiteren Winkel β verkippt ist, welche parallel zur Längsachse der Fördereinheit 20 und in einer horizontalen Ebene verläuft. Bei einer mittigen Anordnung der Bilderzeugungseinrichtung 70 bzw. des Lasers 72 kann die weitere Kippachse 110 koaxial zu Längsachse der Fördereinheit 20 verlaufen.

Der weitere Winkel β liegt in einer Größenordnung von etwa 10° bis 30°, vorzugsweise bei etwa 20°.

In Figur 12 ist ein Ausführungsbeispiel gezeigt, bei dem die Detektionsbilder 86 der beiden Fördereinheiten 20.1, 20.2, welche eine Fördereinrichtung 18 bilden, gegensinnig um diese Kippachse 110 verkippt sind.

In Figur 13 ist ein Ausführungsbeispiel gezeigt, bei dem die Detektionsbilder 86 der beiden Fördereinheiten 20.1, 20.2, welche eine Fördereinrichtung 18 bilden, gleichsinnig um diese Kippachse 110 verkippt sind.

Durch die Verkippung um die Kippachse 110 wird die Detektionslinie 90 schräg auf den Boden 16 projiziert. In entsprechender Weise haben auch die im Kamerabild 94 erscheinenden Analyselinien 96 des Analysebildes 98 einen schrägen Verlauf. Für den Auswertealgorithmus bedeutet dies unter anderem, dass auch der Soll-Bereich 104 schräg angesetzt werden muss. Auf diese Weise kann das Sicherheitssystem 60 die Detektionslinien 90 der einzelnen Fördereinheiten 20 einer Fördereinrichtung 18 unterscheiden.

Bei den oben erläuterten Ausführungsbeispielen sind die Kopfmodule 64 so an den Fördereinheiten 20 angebracht, dass sich ihr Abstand vom Boden 16 nicht verändert, unabhängig davon, ob sich die Fördereinheit 20 in ihrer Leer- oder in ihrer Förderkonfiguration befindet.

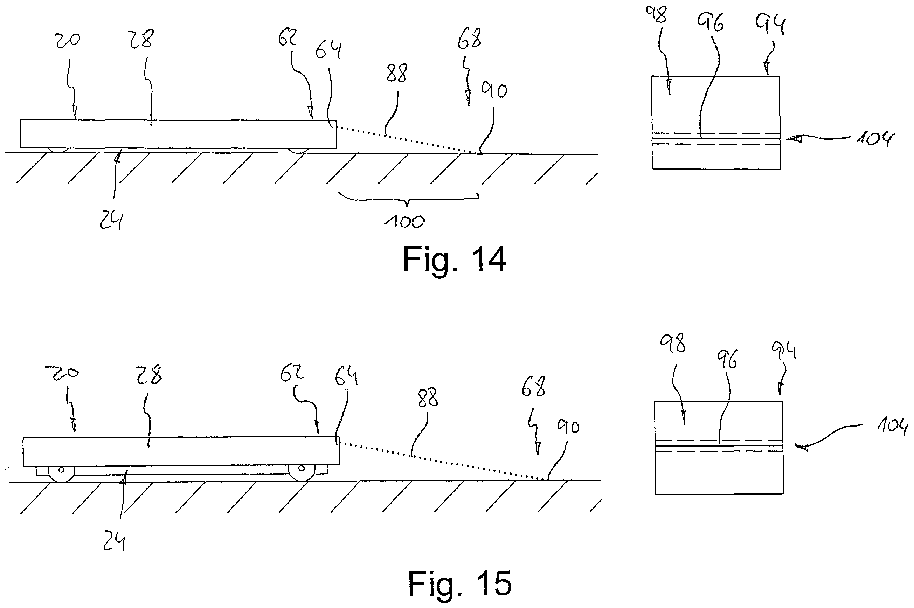

Bei einem in den Figuren 14 bis 17 gezeigten Ausführungsbeispiel sind die Kopfmodule 64 von dem Tragelement 28 mitgeführt, so dass sich der Abstand zwischen Kopfmodul 20 und dem Boden 16 verändert, wenn das Tragelement 28 angehoben oder abgesenkt wird.

Hierdurch ist der Abstand 100 zwischen der Fördereinheit 20 und der Detektionslinie 90 in der Leerkonfiguration der Fördereinheit 20 kleiner als in deren Förderkonfiguration mit angehobenem Tragelement 28, wie ein Vergleich der Figuren 14 und 15 gut veranschaulicht.

Dies muss bei der Erstellung des zugehörigen Analysebildes 98 berücksichtigt werden; der Soll-Bereich 104 muss in der Leerkonfiguration der Fördereinheit 20 tiefer angesiedelt werden als in deren Förderkonfiguration, wie es ebenfalls aus den Figuren 14 und 15 hervorgeht.

Zugleich ist dadurch jedoch auch die Breite der Detektionslinie 90 bei der Leerkonfiguration kleiner als in der Förderkonfiguration.

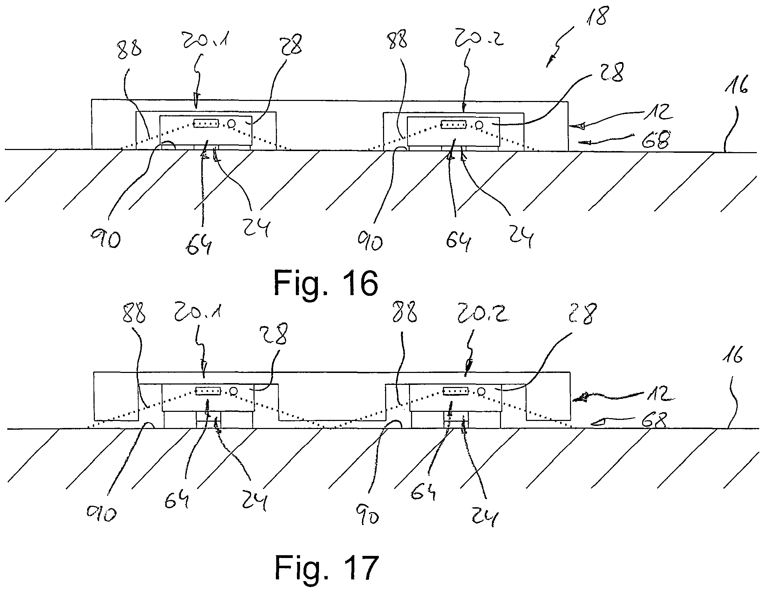

Dies muss im Hinblick auf den Überlappungsbereich 102 berücksichtigt werden. Dabei muss sichergestellt sein, dass die Detektionsbilder 86 zweier Fördereinheiten 20 einer Fördereinrichtung 18 zumindest dann wie oben erläutert überlappen, wenn die Fördereinheiten 20 ihre Förderkonfiguration einnehmen. Nur dann kann ein Ladungsträger 12 mitgeführt und zugleich überwacht werden, dass auch der Bereich zwischen den Fördereinheiten 20 im Fahrweg der Fördereinrichtung 18 frei ist. Dies zeigt Figur 17.

Wie Figur 16 veranschaulicht, muss eine solche Überlappung in der Leerkonfiguration nicht vorhanden sein. Dabei sollte die Detektionslinie 90 jedoch stets seitlich über die lichte Breite einer Fördereinheit 20 hinausragen, so dass der Fahrweg vor einer einzelnen Fördereinheit 20 sicher auf Hindernisse überwacht werden kann.

Das Sicherheitssystem 60 einer Fördereinheit 20 arbeitet sowohl bei einer Alleinfahrt als auch bei einer Fördereinrichtung 18, bei welcher zwei Fördereinheiten 20 einen Verband bilden. Im Falle einer Fördereinrichtung 18, insbesondere im Falle einer beladenen Fördereinrichtung 18, müssen die beiden Fördereinheiten 20 so miteinander kommunizieren bzw. die Zentralsteuerung des Systems derart ausgelegt sein, dass dann, wenn eine der beiden Fördereinheiten 20 ein Hindernis detektiert, diese Fördereinheit 20 ein Stoppsignal an die andere Fördereinheit 20 übermitteln kann, so dass die gesamte Fördereinrichtung 18 im Gefahrenfalle zum Stillstand kommt.

## Patentansprüche

1. Fördersystem zum Fördern von beladenen oder unbeladenen Ladungsträgern (12) mit mehreren Fördereinrichtungen (18), wobei die Fördereinrichtungen (18) jeweils zwei zusammenarbeitende Fördereinheiten (20) zum Fördern von beladenen oder unbeladenen Ladungsträgern (12) umfassen, jede Fördereinheit (20) mit
a) einem Fahrwerk (24), welches auf Bodenrollen (26) verfahrbar ist;
b) einem von dem Fahrwerk (24) mitgeführten Tragelement (28), welches bezogen auf das Fahrwerk (24) anhebbar oder absenkbar ist, derart, dass die Fördereinheit in einer Leerkonfiguration einen Ladungsträger (12) unterfahren und in einer Förderkonfiguration einen Ladungsträger(12) mit dem Tragelement (28) aufnehmen und zusammen mit einer weiteren Fördereinheit (20) fördern kann;
c) einem Antriebssystem (30), mittels welchem wenigstens eine der Bodenrollen (26) und das Tragelement (28) antreibbar sind;
wobei
d) von jeder Fördereinheit (20) ein Sicherheitssystem (60) mitgeführt wird, mittels welchem Hindernisse, die sich in dem Fahrweg der Fördereinheit (20) befinden und eine Weiterfahrt der Fördereinheit (20) einschränken, erfassbar sind, sowie eine Steuereinheit (58) mitgeführt wird, über welche die Fördereinheit (20) mit einer Zentralsteuerung kommuniziert;
**dadurch gekennzeichnet, dass**
e) das Sicherheitssystem (60) eine optische Detektionseinrichtung (66) umfasst;
f) die optische Detektionseinrichtung (66) eine Bilderzeugungseinrichtung (70) umfasst, welche eingerichtet ist, ein Detektionsbild (86) im Fahrweg der Fördereinheit (20) zu erzeugen, und eine Kamera (74) umfasst, welche eingerichtet ist, das Detektionsbild (86) im Fahrweg aufzunehmen und als Analysebild (98) anzuzeigen und
g) das Sicherheitssystem (60) dazu eingerichtet ist, bei einem Erkennen von Hindernissen dies der Zentralsteuerung über die Steuereinheit (58) mitzuteilen, und die Zentralsteuerung ein Stoppsignal an eine Fördereinheit übermittelt.

2. Fördersystem nach Anspruch 1, **dadurch gekennzeichnet, dass** das Detektionsbild (86) eine Detektionslinie (90) ist.

3. Fördersystem nach Anspruch 2, **dadurch gekennzeichnet, dass** durch die Bilderzeugungseinrichtung (70) ein Strahlfächer (88) erzeugbar ist, welcher aus einer horizontalen Ebene in einem Winkel (α) um eine Kippachse (92), die horizontal und senkrecht zur Längsachse einer Fördereinheit (20) verläuft, verkippt ist und in den Fahrweg der Fördereinheit (20) abgegeben wird.

4. Fördersystem nach Anspruch 3, **dadurch gekennzeichnet, dass** der Winkel (α) zwischen 2° und 10°, vorzugsweise etwas 5° beträgt.

5. Fördersystem nach Anspruch 3 oder 4, **dadurch gekennzeichnet, dass** durch die Bilderzeugungseinrichtung (70) ein Strahlfächer (88) erzeugbar ist, welcher außerdem in einem Winkel (β) um eine weitere Kippachse (110), die parallel zur Längsachse der Fördereinheit (20) und in einer horizontalen Ebene verläuft, verkippt ist und in den Fahrweg der Fördereinheit (20) abgegeben wird.

6. Fördersystem nach einem der Ansprüche 1 bis 5, **dadurch gekennzeichnet, dass** die Detektionsbilder (86) der wenigstens zwei Fördereinheiten (20) so abgestimmt sind, dass diese in einem Überlappungsbereich (102) in Fahrtrichtung vor den Fördereinheiten (20) überlappen.

## Claims

1. A conveying system for conveying loaded or unloaded load carriers (12), comprising a plurality of conveying devices (18), the conveying devices (18) each comprising two cooperating conveying units (20) for conveying loaded or unloaded load carriers (12), each conveying unit (20) having
a) a chassis (24) which can be moved on floor rollers (26);
b) a carrying element (28) carried along by the chassis (24), which can be raised or lowered relative to the chassis (24) in such a way that in an empty configuration the conveying unit can drive under a load carrier (12) and in a conveying configuration can pick up a load carrier (12) with the carrying element (28) and convey it together with another conveying unit (20);
c) a drive system (30) by means of which at least one of the floor rollers (26) and the carrying element (28) can be driven;
wherein
d) a safety system (60) is carried along by each conveying unit (20), by means of which obstacles which are located in the driving path of the conveying unit (20) and restrict further driving of the conveying unit (20) can be detected, and a control unit (58) is carried along, via which the conveying unit (20) communicates with a central control;
**characterized in that**
e) the safety system (60) comprises an optical detection device (66);
f) the optical detection device (66) comprises an imaging device (70) configured to generate a detection image (86) in the driving path of the conveying unit (20) and comprises a camera (74) configured to capture the detection image (86) in the driving path and display it as an analysis image (98); and
g) the safety system (60) is configured to communicate this to the central control via the control unit (58) when obstacles are detected.

2. Conveying system according to claim 1, **characterized in that** the detection image (86) is a detection line (90).

3. Conveying system according to claim 2, **characterized in that** the imaging device (70) can generate a beam fan (88) which is tilted from a horizontal plane at an angle (α) about a tilting axis (92) which is horizontal and perpendicular to the longitudinal axis of a conveying unit (20) and is delivered into the driving path of the conveying unit (20).

4. Conveying system according to claim 3, **characterized in that** the angle (α) is between 2° and 10°, preferably about 5°.

5. Conveying system according to claim 3 or 4, **characterized in that** a beam fan (88) can be generated by the imaging device (70), which beam fan (88) is also tilted at an angle (β) about a further tilting axis (110), which runs parallel to the longitudinal axis of the conveying unit (20) and in a horizontal plane, and is delivered into the driving path of the conveying unit (20).

6. Conveying system according to any one of claims 1 to 5, **characterized in that** the detection images (86) of the at least two conveying units (20) are coordinated so that they overlap in an overlap area (102) in the driving direction in front of the conveying units (20).

## Revendications

1. Système de transport pour le transport de porteurs de charge chargés ou non chargés (12) avec plusieurs dispositifs de transport (18), dans lequel les dispositifs de transport (18) comprennent chacun deux unités de transport coopérantes (20) pour le transport de porteurs de charge chargés ou non chargés (12), chaque unité de transport (20) avec
a) un mécanisme de roulement (24) qui peut être déplacé sur des rouleaux au sol (26) ;
b) un élément porteur (28) entraîné par le mécanisme de roulement (24) qui peut être soulevé ou abaissé par rapport au mécanisme de roulement (24) de telle sorte que l'unité de transport peut rouler en dessous d'un porteur de charges (12) dans une configuration vide, et recevoir un porteur de charges (12) avec l'élément porteur (28) et le transporter conjointement à une autre unité de transport (20) dans une configuration de transport ;
c) un système d'entraînement (30) au moyen duquel au moins un des rouleaux au sol (26) et l'élément porteur (28) peuvent être entraînés ;
dans lequel
d) sont entraînés par chaque unité de transport (20) un système de sécurité (60), au moyen duquel des obstacles qui se trouvent dans le trajet de déplacement de l'unité de transport (20) et limitent une continuation de déplacement de l'unité de transport (20) peuvent être détectés, ainsi qu'une unité de commande (58), par le biais de laquelle l'unité de transport (20) communique avec une commande centralisée ;
**caractérisé en ce que**
e) le système de sécurité (60) comprend un dispositif de détection optique (66) ;
f) le dispositif de détection optique (66) comprend un dispositif de génération d'image (70) qui est configuré pour générer une image de détection (86) dans le trajet de déplacement de l'unité de transport (20), et comprend une caméra (74) qui est configurée pour recevoir l'image de détection (86) dans le trajet de déplacement et l'afficher en tant qu'image d'analyse (98), et
g) le système de sécurité (60) est configuré pour communiquer lors d'une reconnaissance d'obstacles cela à la commande centralisée par le biais de l'unité de commande (58), et la commande centralisée transmet un signal d'arrêt à une unité de transport.

2. Système de transport selon la revendication 1, **caractérisé en ce que** l'image de détection (86) est une ligne de détection (90).

3. Système de transport selon la revendication 2, **caractérisé en ce qu'**un éventail de rayon (88) peut être généré par le dispositif de génération d'image (70), lequel est basculé d'un plan horizontal à un angle (α) autour d'un axe de basculement (92) qui s'étend horizontalement et perpendiculairement à l'axe longitudinal d'une unité de transport (20), et est émis dans le trajet de déplacement de l'unité de transport (20).

4. Système de transport selon la revendication 3, **caractérisé en ce que** l'angle (α) est compris entre 2° et 10°, de préférence d'environ 5°.

5. Système de transport selon la revendication 3 ou 4, **caractérisé en ce qu'**un éventail de rayon (88) peut être généré par le dispositif de génération d'image (70), lequel est en outre basculé à un angle (β) autour d'un autre axe de basculement (110) qui s'étend parallèlement à l'axe longitudinal de l'unité de transport (20) et dans un plan horizontal, et est émis dans le trajet de déplacement de l'unité de transport (20).

6. Système de transport selon une des revendications 1 à 5, **caractérisé en ce que** les images de détection (86) des au moins deux unités de transport (20) sont accordées de sorte que celles-ci se chevauchent dans une région de chevauchement (102) dans la direction de déplacement avant les unités de transport (20).
